# EUROPÄISCHE PATENTSCHRIFT

(11) **EP 3 439 945 B1**
(45) Veröffentlichungstag und Bekanntmachung des Hinweises auf die Patenterteilung: **16.12.2020**
(21) Anmeldenummer: 17715443.2
(22) Anmeldetag: 31.03.2017
(51) Int. Cl.: B62M 6/50, B62M 6/55

(54) **ANTRIEBSVORRICHTUNG MIT EINEM SENSOR**
DRIVE DEVICE COMPRISING A SENSOR
DISPOSITIF D'ENTRAÎNEMENT MUNI D'UN CAPTEUR

(30) Priorität: 04.04.2016 DE 102016205541
(43) Veröffentlichungstag der Anmeldung: 13.02.2019
(60) Teilanmeldung: 20162032.5
(73) Patentinhaber: QCS Quality Consult Service GmbH, 9058 Brülisau (CH)
(72) Erfinder: LAUER, Swen, 82467 Garmisch-Partenkirchen (DE)
(74) Vertreter: Zimmermann, Tankred Klaus
(86) Internationale Anmeldenummer: PCT/EP2017/057682
(87) Internationale Veröffentlichungsnummer: WO 2017/174455

(56) Entgegenhaltungen:
- WO-A2-2012/162198
- US-B1- 7 108 097

## Beschreibung

Die Erfindung betrifft eine Antriebsvorrichtung für ein Fahrzeug mit den Merkmalen von Anspruch 1 und ein elektromotorisch betriebenes zweirädriges Fahrrad mit einer derartigen Antriebsvorrichtung gemäß Anspruch 13.

Fahrzeuge werden heutzutage regelmäßig zum Personen- oder Güterverkehr eingesetzt. Fahrzeuge können durch Muskelkraft oder durch motorische Hilfskräfte bewegt werden. Bekannt sind einspurige Fahrzeuge, wie zum Beispiel motorisierte oder unmotorisierte Zweiräder, sowie zwei- oder mehrspurige Fahrzeuge, wie zum Beispiel motorisierte oder unmotorisierte Dreiräder, sogenannte Quads, Autos und dergleichen.

Immer häufiger ersetzen hierbei Elektromotoren konventionelle Fahrzeugantriebe, wie z.B. Diesel- oder Benzinmotoren. Es ist ein großer Trend in Richtung der sogenannten Elektromobilität zu erkennen. Ein Beispiel für ein elektromotorisch betriebenes Fahrzeug ist ein elektromotorisch betriebenes Fahrrad, das auch als E-Bike bezeichnet wird.

Bei den E-Bikes gibt es unterschiedliche Bauformen. Zum einen gibt es E-Bikes, bei welchen der Elektromotor nach Bedarf mittels Knöpfen oder Drehgriffen zu- oder abschaltbar ist. Hier kann der Elektromotor als alleiniger Antrieb genutzt werden. Zum anderen gibt es E-Bikes mit Tretkraftunterstützung, sogenannte Pedelecs, deren Elektromotor in Abhängigkeit von der momentanen Tretkraft zugeschaltet wird. Hier wird der Elektromotor lediglich unterstützend beim Treten zugeschaltet.

Insbesondere bei den Pedelecs sollte vorteilhafter Weise eine Sensorik vorgesehen sein, die das vom Fahrer mittels der Tretkurbel aufgebrachte Drehmoment möglichst verzögerungsfrei misst. Das Messsignal kann von einer geeigneten Motorsteuerung ausgewertet werden, welche dann wiederum, basierend auf diesen Messwerten, die unterstützende Motorleistung regelt. Denn nur so kann gewährleistet werden, dass der Fahrer auch zum richtigen Zeitpunkt durch den Elektromotor unterstützt wird, z.B. beim Anfahren, beim Beschleunigen oder aber auch beim Bergauffahren.

Die WO 2012 / 162 198 A1 beschreibt einen Drehmomentsensor für ein Fahrrad. Dieser Drehmomentsensor kann an einer Kette angeordnet sein. Letzteres wird in den Figuren der Druckschrift näher anhand eines in die Kette eingreifenden Ritzels beschrieben. In den Ausführungsformen, wie sie in den Figuren 6 und 7 der Druckschrift abgebildet sind, ist der Sensor direkt an der Antriebskette, d.h. zwischen dem ersten Antrieb (Kurbel) und dem Hinterrad angeordnet.

Die US 7 108 097 B1 beschreibt ein Liegerad ("recumbent") bzw. Dreirad. In der Beschreibungseinleitung der Druckschrift wird ganz klar zwischen derartigen Liege- bzw. Dreirädern und konventionellen Zweirädern bzw. Fahrrädern unterschieden. Die Druckschrift zeigt in den Figuren 2A und 2B zwei Sensoren. Dabei ist der am Lasttrum angeordnete Sensor innenseitig am Kraftübertragungsmittel angeordnet. Der außenseitig am Kraftübertragungsmittel angeordnete Sensor ist am Leertrum angeordnet.

Dokument JPH08067289 offenbart die Präambel des Anspruchs 1.

Weitere bekannte Konzepte schlagen vor, die Drehmoment-Sensorik sinnvoller Weise unmittelbar an der Tretkurbel anzubringen, da der Fahrer die Kraft zum Bewegen des Fahrrads direkt über die Tretkurbel aufbringt. Hierbei werden unter anderem Dehnmessstreifen zwischen Kurbelachse und Tretlager zur Messung des Drehmoments eingesetzt.

Diese Dehnmessstreifen sind zwar günstig in der Herstellung, jedoch ist die Integration in die Tretkurbel aufwändig. Darüber hinaus sind derartige direkt kurbelseitig angeordnete Dehnmessstreifen anfällig für Abrieb und Verschmutzung und müssen häufig gereinigt bzw. gewartet werden.

Es ist daher erstrebenswert, bestehende elektromotorische Fahrzeugantriebe mit Drehmoment-Sensorik zu verbessern, um den erwähnten Nachteilen im Stand der Technik zu begegnen.

Dies wird erfindungsgemäß mit einer Antriebsvorrichtung mit den Merkmalen von Anspruch 1 gelöst. Ferner wird vorgeschlagen, diese Vorrichtung in einem elektromotorisch betriebenen zweirädrigen Fahrrad zu verwenden.

Die erfindungsgemäße Antriebsvorrichtung für ein elektromotorisch betriebenes zweirädriges Fahrrad weist unter anderem einen ersten Antrieb zum Bereitstellen einer ersten Antriebskraft und einen Elektromotor zum Bereitstellen einer zweiten Antriebskraft auf. Ferner weist die erfindungsgemäße Antriebsvorrichtung einen Abtrieb auf, der ausgebildet ist, um die erste und/oder die zweite Antriebskraft aufzunehmen und an mindestens ein anzutreibendes Rad des Fahrzeugs abzugeben. Zwischen dem ersten Antrieb und dem Abtrieb ist ein Kraftübertragungsmittel angeordnet. Das Kraftübertragungsmittel ist ein Zugmittel und weist bei Belastung ein Zugtrum bzw. Lasttrum und ein Leertrum auf. Die erfindungsgemäße Antriebsvorrichtung weist ferner einen im Lasttrum des Kraftübertragungsmittels angeordneten Sensor auf, der ausgebildet ist, um Sensordaten in Abhängigkeit einer Auslenkung des Kraftübertragungsmittels zu generieren. Der Fahrer übt eine erste Kraft über den ersten Antrieb aus, die mittels des Kraftübertragungsmittels auf den Abtrieb übertragen wird. Da das Kraftübertragungsmittel zwischen dem ersten Antrieb und dem Abtrieb angeordnet ist, wird das Kraftübertragungsmittel beim Ausüben der ersten Kraft auf der Lasttrum-Seite gespannt. Dabei ist der Betrag der Spannung des Lasttrums abhängig von dem aufgebrachten Drehmoment, d.h. je mehr Drehmoment der Fahrer mittels des ersten Antriebs in die Antriebsvorrichtung einbringt, desto stärker spannt sich das Lasttrum des Kraftübertragungsmittels. Der Sensor ist im Lasttrum angeordnet und kann ebendiese Auslenkungen des Lasttrums direkt erfassen. Je nach Auslenkung des Lasttrums, d.h. in Abhängigkeit von einem vom Fahrer aufgebrachten Drehmoment, erzeugt der Sensor entsprechende Daten, die mit dem Betrag der Auslenkung des Lasttrums korrelieren. Die Daten der Auslenkung des Lasttrums können bei entsprechender Umrechnung als Drehmomentwerte interpretiert werden. Das heißt durch die mittels des Sensors erfasste Auslenkung des Lasttrums kann auf die Kraft bzw. das Drehmoment geschlossen werden, dass der Fahrer aktuell über den ersten Antrieb in die Antriebsvorrichtung einbringt. Dieses erfasste Ist-Drehmoment am ersten Antrieb kann von einer Motorsteuerung dazu genutzt werden, um den Betrag der zuschaltbaren Motorleistung zu regeln. Das Lasttrum wird beim Aufbringen der Antriebskraft durch den Fahrer am ersten Antrieb weitestgehend verzögerungsfrei auf das Kraftübertragungsmittel übertragen. Demnach geschieht auch die Auslenkung des Lasttrums des Kraftübertragungsmittels weitestgehend verzögerungsfrei. Somit kann auch die Erfassung der Auslenkung mittels des Sensors weitestgehend verzögerungsfrei erfolgen. Derartige Sensoren, die vorzugsweise mechanisch die Auslenkung erfassen, sind einfach und kostengünstig herstellbar. Darüber hinaus unterliegen sie einem nur sehr geringen Verschleiß, insbesondere im Vergleich zu in der Tretkurbelachse angebrachten Dehnmesstreifen. Die erfindungsgemäße Sensorik weist daher eine sehr hohe Lebensdauer auf.

Erfindungsgemäß weist der Sensor eine Auslenkvorrichtung auf, die mit dem Lasttrum des Kraftübertragungsmittels in Kontakt ist und derart mit dem Kraftübertragungsmittel zusammenwirkt, dass sie bei einem Spannen des Lasttrums des Kraftübertragungsmittels ausgelenkt wird. Eine Auslenkvorrichtung kann beispielsweise ein linear verschiebbares Bauteil, wie z.B. eine in einer Führung gelagerte Stange, oder ein rotatorisch gelagertes Bauteil, wie z.B. eine Wippenkonstruktion sein. Die Auslenkvorrichtung steht mit dem Kraftübertragungsmittel vorzugsweise direkt in physischem Kontakt. Das heißt, die Auslenkvorrichtung folgt der Auslenkung des Lasttrums des Kraftübertragungsmittels weitestgehend verzögerungsfrei. Beim Spannen des Lasttrums wird die Auslenkvorrichtung in eine erste Richtung ausgelenkt. Bei nachlassender Spannung des Lasttrums wird die Auslenkvorrichtung entsprechend in eine der ersten Richtung entgegengesetzte zweite Richtung ausgelenkt.

Gemäß eines Ausführungsbeispiels kann die Antriebsvorrichtung eine Steuervorrichtung aufweisen, die ausgebildet ist, um die Sensordaten zu erfassen und den Elektromotor, basierend auf den Sensordaten, derart anzusteuern, dass dieser ein von der Auslenkung des Lasttrums abhängiges Drehmoment oder von der Auslenkung des Lasttrums abhängige Drehzahlen generiert. Die Steuervorrichtung kann unter anderem ein Motorsteuergerät aufweisen. Der Sensor liefert dem Motorsteuergerät die gemessenen Werte der Ist-Auslenkung des Lasttrums des Kraftübertragungsmittels. Das Motorsteuergerät empfängt diese Daten und kann diese als Ist-Drehmomentwerte interpretieren. Somit ist der Motorsteuervorrichtung der aktuelle Ist-Drehmomentwert bekannt, den der Fahrer im aktuellen Zeitpunkt über den ersten Antrieb (z.B. Tretkurbel) in die Antriebsvorrichtung einbringt. Das Motorsteuergerät kann einen Speicher aufweisen, in dem ein vordefiniertes Motorkennfeld hinterlegt ist. Dieses Kennfeld bestimmt die mittels des Elektromotors zuzuschaltende Leistung, um eine gewünschte Unterstützung des Fahrers zu erreichen.

Es ist vorstellbar, dass das Kraftübertragungsmittel als eine Endlosanordnung, insbesondere als eine Kette oder als ein Keilriemen oder als ein Zahnriemen ausgebildet ist. Diese Formen von Kraftübertragungsmitteln weisen eine hohe Zugstabilität in Längsrichtung auf. Das vom Fahrer aufgebrachte Drehmoment kann mittels dieser Kraftübertragungsmittel weitestgehend verzögerungsfrei vom ersten Antrieb auf den Abtrieb übertragen werden. Darüber hinaus erfahren derartige Kraftübertragungsmittel aufgrund ihrer hohen Zugstabilität eine sofortige Auslenkung im Lasttrum. Somit kann der Sensor die Auslenkung des Lasttrums weitestgehend verzögerungsfrei erfassen.

Erfindungsgemäß ist der Sensor derart angeordnet, dass dieser mit der Außenseite des Lasttrums des Kraftübertragungsmittels in Kontakt ist. An der Außenseite des Lasttrums kann der Sensor die Auslenkung des selbigen gut erfassen, da ein als Endlostrieb ausgebildetes Kraftübertragungsmittel bei darauf einwirkender Kraft in der Regel nach außen ausgelenkt wird.

Es ist vorstellbar, dass der erste Antrieb, der Elektromotor und der Abtrieb jeweils eine Mittelachse aufweisen, und der erste Antrieb, der Elektromotor und der Abtrieb derart zueinander angeordnet sind, dass deren Mittelachsen in radialer Richtung zueinander versetzt angeordnet sind. Anders ausgedrückt sind der erste Antrieb, der Elektromotor und der Abtrieb zueinander beabstandet angeordnet. Beispielsweise kann der erste Antrieb eine Tretkurbel sein, deren Tretkurbelachse die Mittelachse definiert. Der Elektromotor kann eine Welle, insbesondere eine Ausgangswelle, aufweisen, welche die Mittelachse des Motors definiert. Der Abtrieb kann ein Ritzel, Zahnrad oder dergleichen sein, dessen Rotationsachse die Mittelachse definiert. Die jeweiligen Mittelachsen können vorteilhafter Weise parallel zueinander angeordnet sein. Entlang dieser Mittelachsen sind der erste Antrieb, der Elektromotor und der Abtrieb in radialer Richtung zueinander beabstandet angeordnet. Dadurch ergibt sich die Möglichkeit, den Abtrieb von dem ersten Antrieb (z.B. Tretkurbel) zu entkoppeln und beide mittels des Kraftübertragungsmittels miteinander zu verbinden. Dadurch ist es möglich, das vom Fahrer aufgebrachte Drehmoment an dem Kraftübertragungsmittel selbst abzugreifen.

Es ist denkbar, dass der erste Antrieb, der Elektromotor und der Abtrieb jeweils eine Mittelachse aufweisen, und der erste Antrieb, der Elektromotor und der Abtrieb derart zueinander angeordnet sind, dass die Mittelachsen des Elektromotors und des Abtriebs koaxial sind, und die Mittelachse des ersten Antriebs radial versetzt zu den Mittelachsen des Elektromotors und des Abtriebs angeordnet ist. Anders ausgedrückt, ist der Abtrieb an dem Elektromotor angeordnet, und insbesondere koaxial zur Mittelachse bzw. zur Ausgangswelle des Elektromotors. Somit kann der Elektromotor sein zusätzliches Drehmoment unmittelbar in den Abtrieb einleiten.

In einer möglichen Ausführungsform kann der Elektromotor mittels eines weiteren Kraftübertragungsmittels, insbesondere mittels einer Kette oder eines Zahnriemens oder eines Keilriemens, mit dem Abtrieb verbunden sein. Somit kann der Elektromotor von dem Abtrieb beabstandet angeordnet werden. Dadurch erhält man mehr Möglichkeiten zur Anordnung des Abtriebs, da dieser im Vergleich zum Elektromotor wesentlich kleinere Abmessungen aufweist. Die Kraftübertragung zwischen Elektromotor und Abtrieb geschieht mittels des weiteren Kraftübertragungsmittels. Somit ist also der erste Antrieb mittels eines ersten Kraftübertragungsmittels mit dem Abtrieb verbunden, und der Elektromotor ist mittels eines zweiten Kraftübertragungsmittels mit dem Abtrieb verbunden. Vorteilhafter Weise enthält zumindest eine der Komponenten (erster Antrieb, Elektromotor, Abtrieb) einen Freilauf, sodass der erste Antrieb (z.B. Tretkurbel) von dem Elektromotor bezüglich eines Kraftflusses entkoppelbar ist.

Gemäß einer Ausführungsform können der erste Antrieb und der Abtrieb in radialer Richtung zwischen 100 mm und 300 mm, vorzugsweise zwischen 100 mm und 200 mm, und bevorzugt zwischen 150 mm und 200 mm, voneinander beabstandet angeordnet sein. Diese Beabstandungen führen dazu, dass das Lasttrum eine besonders günstige Länge zum Messen der Auslenkung aufweist. Außerdem kann der Sensor prinzipiell über die gesamte Länge des Lasttrums hinweg anordenbar sein, d.h. bei größerer Länge des Lasttrums bestehen mehr Möglichkeiten zur Positionierung des Sensors. Dies kann insbesondere bei begrenzt vorhandenem Bauraum vorteilhaft sein.

Es ist denkbar, dass der erste Antrieb an einer Tretkurbel angeordnet ist, die ausgebildet ist, um eine mittels einer Tretbewegung aufgebrachte mechanische Kraft in die Antriebsvorrichtung einzuleiten. Der erste Antrieb kann beispielsweise ein Riemenrad, Zahnrad oder dergleichen sein, das ausgebildet ist, um mit dem Kraftübertragungsmittel in Eingriff zu gelangen. Dieses kann an der Tretkurbel bzw. an der Tretkurbelwelle angeordnet sein. Dies ist bei E-Bikes, und insbesondere bei Pedelecs der Fall, wobei die mechanische Antriebskraft des Fahrers mittels der Tretkurbel direkt in die Antriebsvorrichtung einbringbar ist.

Es ist vorstellbar, dass der Elektromotor ein Torquemotor ist. Torquemotoren sind spezielle Formen von Elektromotoren, die ein im Vergleich zu konventionellen Elektromotoren höheres Drehmoment liefern. Torquemotoren weisen ein hohes Drehmoment bei vergleichsweise geringen Drehzahlen auf. Daher sind derartige Torquemotoren insbesondere bei E-Bikes vorzugsweise einsetzbar.

Erfindungsgemäß sind ferner der erste Antrieb, der Abtrieb, das Kraftübertragungsmittel und der Sensor in einem gemeinsamen Gehäuse angeordnet. Dies schützt alle Komponenten vor Umwelteinflüssen, wie Schmutz, Staub und Feuchtigkeit.

Außerdem wird hierin beispielhaft eine Vorrichtung zum Bestimmen einer Antriebskraft für ein elektromotorisch betriebenes Fahrzeug beschrieben. Die Vorrichtung weist unter anderem einen Sensor mit einer Auslenkvorrichtung auf, wobei die Auslenkvorrichtung ausgebildet ist, um an einem Lasttrum eines Kraftübertragungsmittels angeordnet zu werden und mit dem Kraftübertragungsmittel derart zusammenzuwirken, dass die Auslenkvorrichtung beim Spannen des Kraftübertragungsmittels ausgelenkt wird. Der Sensor ist ausgebildet, um Sensordaten in Abhängigkeit von der Auslenkung der Auslenkvorrichtung zu generieren. Ferner weist die Vorrichtung eine Steuervorrichtung auf, die ausgebildet ist, um die Sensordaten zu erfassen und, basierend auf den Sensordaten, Steuerdaten zum Ansteuern eines Elektromotors bereitzustellen. Hierbei handelt es sich also um eine Vorrichtung mit der, beispielsweise bei Pedelecs, die Auslenkung des Lasttrums eines Kraftübertragungsmittels gemessen werden kann. Das Kraftübertragungsmittel ist vorzugsweise ein zwischen einem Antrieb und einem Abtrieb verlaufendes Kraftübertragungsmittel, z.B. in Form einer Kette oder eines Riemens. Der Sensor kann mittels der Auslenkvorrichtung die aktuelle Ist-Auslenkung des Kraftübertragungsmittels erfassen und entsprechende Sensordaten an die Steuervorrichtung weitergeben. Die Steuervorrichtung kann beispielsweise ein Motorsteuergerät aufweisen. Der Sensor liefert also dem Motorsteuergerät die gemessenen Werte der Ist-Auslenkung des Lasttrums des Kraftübertragungsmittels. Das Motorsteuergerät empfängt diese Daten und kann diese als Ist-Drehmomentwerte interpretieren. Somit ist der Motorsteuervorrichtung der aktuelle Ist-Drehmomentwert bekannt, der aktuell auf das Kraftübertragungsmittel ausgeübt wird. Das Motorsteuergerät kann einen Speicher aufweisen, in dem ein vordefiniertes Motorkennfeld hinterlegt ist. Dieses Kennfeld bestimmt eine mittels eines Elektromotors zuschaltbare Leistung, um eine gewünschte zusätzliche Motorleistung im Abtrieb zu generieren. Mittels entsprechender Steuerdaten, die das Motorsteuergerät aus dem Kennfeld bestimmt, kann ein Elektromotor definiert angesteuert werden.

Ausführungsbeispiele der Erfindung sind in der Zeichnung dargestellt und werden nachstehend erläutert. Es zeigen:
- Fig. 1: eine Seitenansicht eines elektromotorisch betriebenen Zweirads mit einer erfindungsgemäßen Antriebsvorrichtung,
- Fig. 2: eine weitere Seitenansicht eines vergrößert dargestellten Ausschnitts des elektromotorisch betriebenen Zweirads mit der erfindungsgemäßen Antriebsvorrichtung,
- Fig. 3: eine weitere Seitenansicht eines vergrößert dargestellten Ausschnitts des elektromotorisch betriebenen Zweirads mit der erfindungsgemäßen Antriebsvorrichtung,
- Fig. 4: eine stilisierte Ansicht der Anordnung des ersten Antriebs, des Elektromotors und des Abtriebs relativ zueinander,
- Fig. 5: eine Seitenansicht einer erfindungsgemäßen Antriebsvorrichtung,
- Fig. 6: eine weitere Seitenansicht einer erfindungsgemäßen Antriebsvorrichtung mit einer linear auslenkbaren Auslenkvorrichtung, und
- Fig. 7: eine Seitenansicht einer beispielhaften Antriebsvorrichtung mit einer schwenkbar auslenkbaren Auslenkvorrichtung.

Gleiche Bauteile oder Elemente sind in der nachfolgenden Figurenbeschreibung mit gleichen Bezugszeichen versehen. Unter dem Begriff "Fahrtrichtung" wird die Bewegungsrichtung des jeweiligen Fahrzeugs verstanden, in die sich das Fahrzeug für gewöhnlich hauptsächlich bewegt. Im Sinne der vorliegenden Offenbarung wird darunter eine Vorwärtsrichtung verstanden, soweit nicht anders angegeben.

In der folgenden Figurenbeschreibung werden Zweiräder, und insbesondere zweirädrige E-Bikes, als Ausführungsbeispiele für ein elektromotorisch betriebenes zweirädriges Fahrrad genannt, das mittels der erfindungsgemäßen Antriebsvorrichtung antreibbar ist. Die erfindungsgemäße Antriebsvorrichtung kann beispielsweise aber auch zum Antreiben von elektromotorisch betriebenen Dreirädern, Quads und anderen Fahrzeugen genutzt werden.

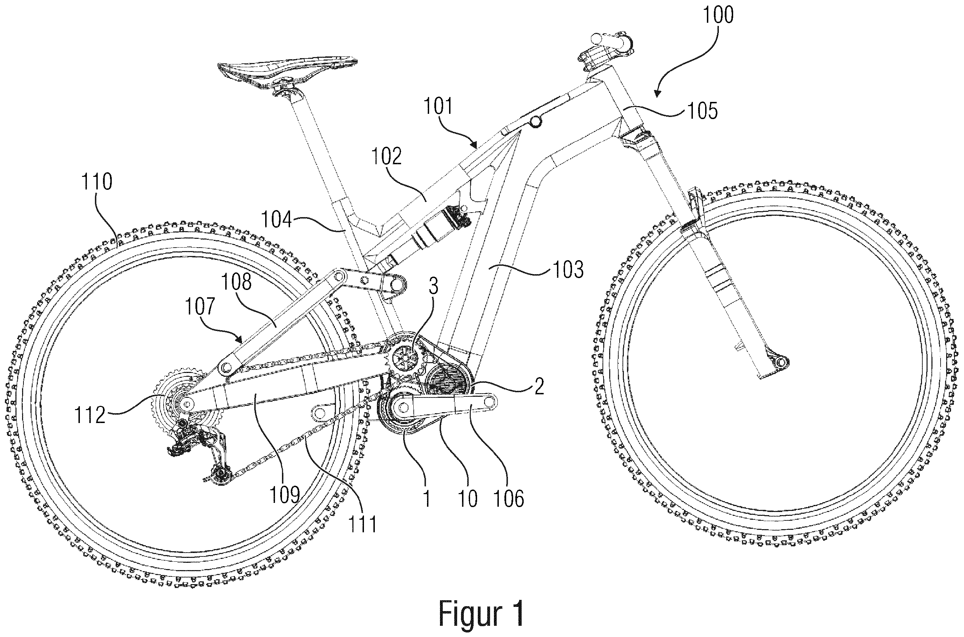

Figur 1 zeigt ein Fahrzeug 100 mit einer erfindungsgemäßen Antriebsvorrichtung 10. Das Fahrzeug ist hier beispielhaft als ein Fahrrad beschrieben. Genauer gesagt handelt es sich um ein Pedelec, das einen zuschaltbaren Elektromotor aufweist, der den Fahrer unterstützt, wenn er tritt.

Das Fahrrad 100 weist einen Hauptrahmen 101 auf. Der Hauptrahmen 101 weist ein Oberrohr 102, ein Unterrohr 103, ein Sattelrohr 104 und ein Steuerrohr 105 auf, die alle miteinander verbunden sind. Die den Elektromotor beinhaltende Antriebsvorrichtung 10 ist unbeweglich an dem Hauptrahmen 101 angeordnet. In diesem Ausführungsbeispiel handelt es sich um ein Mittelmotorkonzept, bei dem der Elektromotor in der Nähe der Tretkurbel 106 angeordnet ist.

Das Fahrrad 100 weist außerdem einen Hinterbau 107 auf, der mit dem Hauptrahmen 101 verbunden ist. Der Hinterbau 107 weist eine Sitzstrebe 108 und eine Kettenstrebe 109 auf. In dem abgebildeten Ausführungsbeispiel sind die Sitzstrebe 108 und die Kettenstrebe 109 gelenkig bzw. drehbar mit dem Hauptrahmen 101 verbunden. Ebenso ist es denkbar, dass der Hinterbau 107 starr mit dem Hauptrahmen 101 verbunden ist.

Die erfindungsgemäße Antriebsvorrichtung 10 weist einen ersten Antrieb 1 zum Bereitstellen einer ersten Antriebskraft auf. In diesem Ausführungsbeispiel handelt es sich um eine Tretkurbel 106 mittels derer der Fahrer eine erste Antriebskraft aufbringen kann.

Die erfindungsgemäße Antriebsvorrichtung 10 weist außerdem einen Elektromotor 2 zum Bereitstellen einer zweiten Antriebskraft auf. Der Elektromotor 2 ist hier beispielhaft in Fahrtrichtung vor der Tretkurbel 106 bzw. vor deren Tretlager angeordnet.

Die erfindungsgemäße Antriebsvorrichtung 10 weist ferner einen Abtrieb 3 auf. Der Abtrieb 3 ist hier beispielhaft als eine Welle mit einem daran angeordneten Ritzel ausgeführt. Der Abtrieb 3 der erfindungsgemäßen Antriebsvorrichtung 10 ist ausgebildet, um die erste und/oder die zweite Antriebskraft aufzunehmen und an mindestens ein anzutreibendes Rad des Fahrzeugs 100 abzugeben. Dies geschieht mittels einer Kette 111, die das Ritzel des Abtriebs 3 mit einem hinteren Ritzelpaket 112, auch Kassette genannt, verbindet.

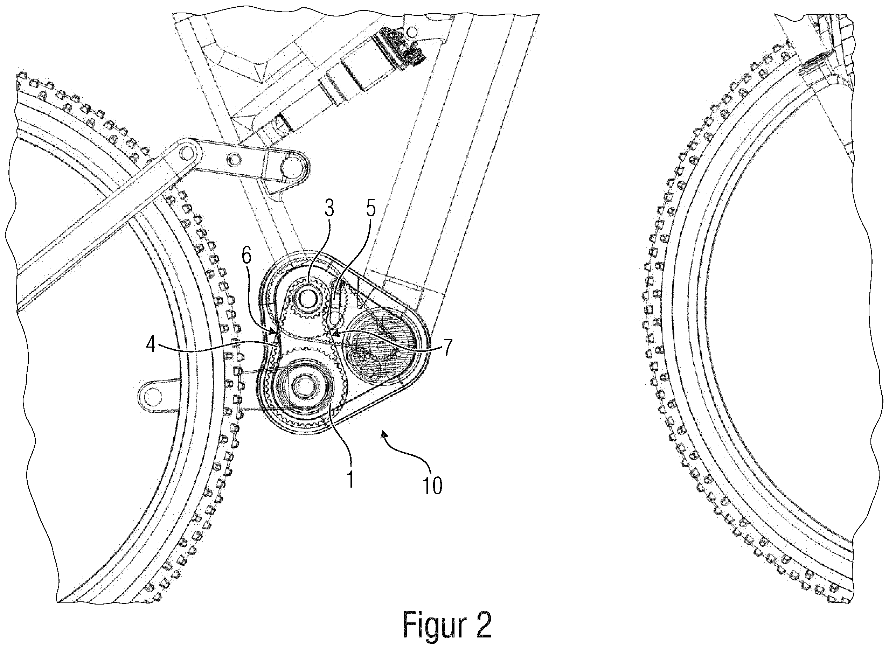

Figur 2 zeigt einen vergrößerten Ausschnitt der erfindungsgemäßen Antriebsvorrichtung 10. Außerdem sind zur besseren Erkennbarkeit die Kettenstrebe 109, die Kette 111, das an dem Abtrieb 3 angeordnete Ritzel sowie der vordere Teil der Tretkurbel 106 in Figur 2 nicht dargestellt.

Es ist zu erkennen, dass die erfindungsgemäße Antriebsvorrichtung 10 ein zwischen dem ersten Antrieb 1 und dem Abtrieb 3 angeordnetes Kraftübertragungsmittel 4 aufweist. Das Kraftübertragungsmittel 4 weist ein Leertrum 6 und ein Lasttrum 7 auf. Leertrum 6 und Lasttrum 7 ergeben sich aus der Rotationsrichtung des ersten Antriebs 1. Bei Vorwärtsfahrt dreht sich der erste Antrieb 1 in der in Figur 2 abgebildeten Anordnung im Uhrzeigersinn, sodass sich in Fahrtrichtung gesehen vorne (bzw. im Bild rechts) das Lasttrum 7, und in Fahrtrichtung gesehen hinten (bzw. im Bild links) das Leertrum 6 einstellt.

Die erfindungsgemäße Antriebsvorrichtung 10 weist außerdem einen im Lasttrum 7 des Kraftübertragungsmittels 4 angeordneten Sensor 5 auf. Der Sensor 5 ist ausgebildet, um Sensordaten in Abhängigkeit einer Auslenkung des Kraftübertragungsmittels 4 zu generieren.

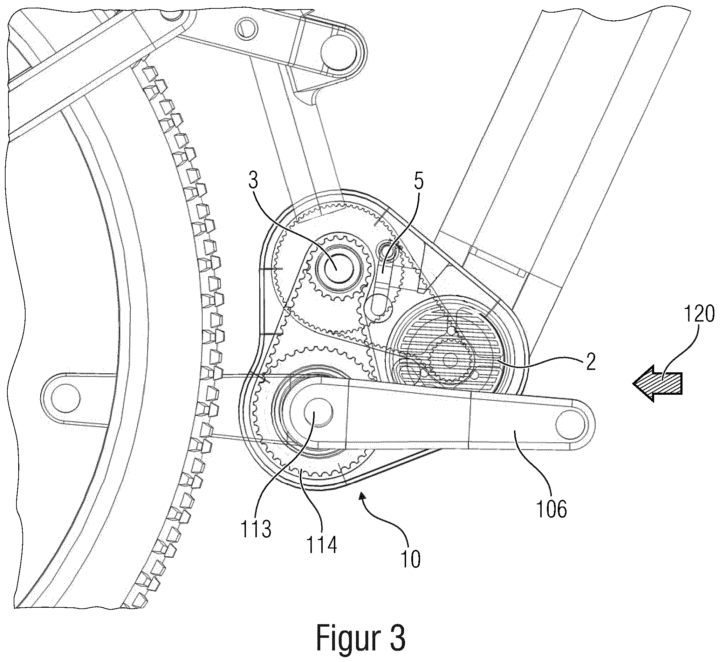

Figur 3 zeigt eine noch weiter vergrößerte Darstellung der erfindungsgemäßen Antriebsvorrichtung 10. Die Tretkurbel 106 weist eine Achse bzw. eine Welle 113 auf. An dieser Welle 113 ist ein Zahnrad 114 angeordnet, das mit dem Kraftübertragungsmittel 4 in Eingriff gelangt. Anstelle des Zahnrads 114 kann auch ein Ritzel, eine profilierte Rolle oder dergleichen vorgesehen sein, welche jeweils ausgebildet sind, um mit dem Kraftübertragungsmittel 4 in Eingriff zu gelangen. Das Zahnrad 114 und die Tretkurbel 106 bzw. dessen Welle 113 bilden somit den ersten Antrieb 3. Anders ausgedrückt ist der erste Antrieb 3 an einer Tretkurbel 106 angeordnet. Die Tretkurbel 106 ist ausgebildet, um eine mittels einer Tretbewegung aufgebrachte mechanische Antriebskraft in die erfindungsgemäße Antriebsvorrichtung 1 einzuleiten.

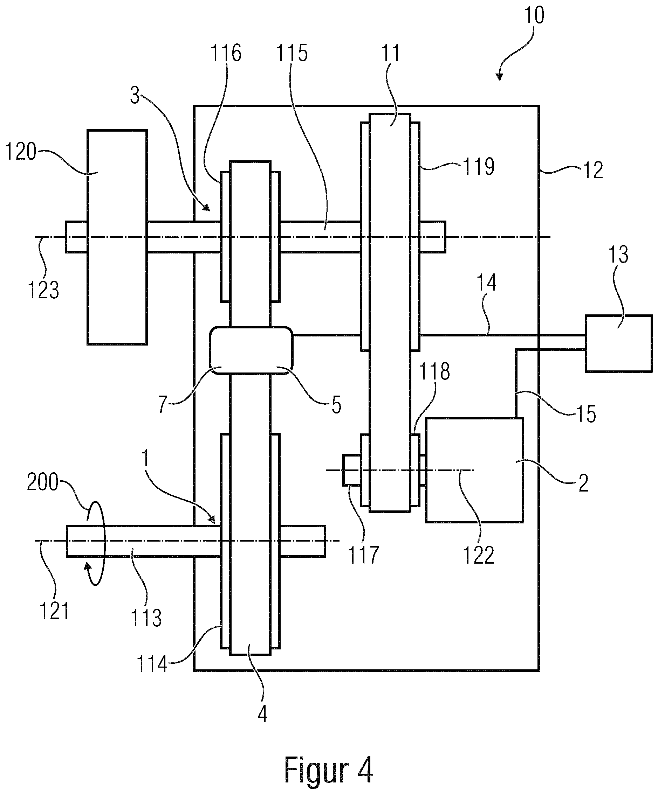

Figur 4 zeigt eine stilisierte Darstellung der erfindungsgemäßen Antriebsvorrichtung 10, insbesondere die Anordnung des ersten Antriebs 1, des Elektromotors 2 und des Abtriebs 3 relativ zueinander, und zwar in einer Ansicht von vorne, d.h. in der in Figur 3 abgebildeten Pfeilrichtung 120.

In Figur 4 ist der erste Antrieb 1, der Elektromotor 2 und der Abtrieb 3 gezeigt. Wie zuvor erwähnt, kann der erste Antrieb 1 ein an einer Tretkurbelwelle 113 angeordnetes Zahnrad 114 aufweisen.

Der erste Antrieb 1 ist mittels eines Kraftübertragungsmittels 4 mit dem Abtrieb 3 verbunden. Der Abtrieb 3 weist ein auf einer Ausgangswelle 115 angeordnetes Zahnrad 116 auf. Das antriebsseitige Zahnrad 114 kann einen größeren Durchmesser als das abtriebsseitige Zahnrad 116 aufweisen, was zu einer Übersetzung ins Schnelle führt.

Bei Betätigung des Antriebs 1 im Uhrzeigersinn, dargestellt durch den Pfeil 200, spannt sich das in Figur 4 zu erkennende Trum des Kraftübertragungsmittels 4. Dieses Trum ist dementsprechend das Lasttrum 7. In dem Lasttrum 7 ist der Sensor 5 angeordnet.

Die erfindungsgemäße Antriebsvorrichtung 10 weist außerdem den Elektromotor 2 auf. Der Elektromotor 2 weist eine Welle 117 auf, an der ein Zahnrad 118 angeordnet ist. Mittels der Welle 117 und dem Zahnrad 118 stellt der Elektromotor 2 eine zweite Antriebskraft bereit.

Das an der Motorwelle 117 angeordnete Zahnrad 118 ist mittels eines weiteren Kraftübertragungsmittels 11 mit einem weiteren, an der Ausgangswelle 115 angeordneten Zahnrad 119 verbunden. Somit ist der Elektromotor 2 mittels des weiteren Kraftübertragungsmittels 11 mit dem Abtrieb 3 verbunden. Das weitere Kraftübertragungsmittel 11 kann vorzugsweise eine Kette, ein Zahnriemen oder ein Keilriemen sein.

Das an der Motorwelle 117 angeordnete Zahnrad 118 kann einen kleineren Durchmesser als das an der Ausgangswelle 115 angeordnete Zahnrad 119 aufweisen. Somit kann eine Übersetzung ins Langsame, bzw. eine Untersetzung mit Drehmomenterhöhung realisiert werden.

An der Ausgangswelle 115 kann ein weiteres Zahnrad 120 angeordnet sein. Dieses Zahnrad 120 dient dazu, die an der Ausgangswelle 115 anliegende Kraft mittels eines umlaufenden Kraftübertragungsmittels auf das Hinterrad des Fahrzeugs zu übertragen. Dies kann beispielsweise mit einer Fahrradkette oder einem Zahnriemen erfolgen. Dementsprechend kann das Zahnrad 120 im Falle eines Kettenantriebs als ein Ritzel ausgebildet sein.

Das Zahnrad bzw. Ritzel 120 kann einen größeren Durchmesser als das mit dem ersten Antrieb 1 verbundene Zahnrad 116, und/oder einen kleineren Durchmesser als das mit dem Elektromotor 2 verbundene Zahnrad 119 aufweisen. Dies hängt von der gewünschten Übersetzung bzw. Untersetzung ab.

Wie außerdem in Figur 4 zu erkennen ist, weist die erfindungsgemäße Antriebsvorrichtung 10 ein Gehäuse 12 auf. Alle beschriebenen Bauteile, mit Ausnahme des Zahnrads bzw. Ritzels 120 und einer Tretkurbel, sind erfindungsgemäß innerhalb dieses Gehäuses 12 angeordnet.

Die erfindungsgemäße Antriebsvorrichtung 10 ist derart ausgebildet, dass die Kraft des ersten Antriebs 1 mittels des Kraftübertragungsmittels 4 auf den Abtrieb 3 geleitet werden kann. Der Elektromotor 2 schaltet sich lastabhängig dazu, d.h. je mehr Drehmoment am ersten Antrieb 1 generiert wird, umso mehr Leistung gibt der Elektromotor 2 ab. Diese zusätzliche elektromotorische Hilfskraft wird ebenfalls auf den Abtrieb 3 geschaltet.

Am ersten Antrieb wird das erwähnte Drehmoment vorzugsweise mittels einer Tretkurbel erzeugt. Beim Treten spannt sich das Lasttrum 7 des Kraftübertragungsmittels 4. Je größer das an dem ersten Antrieb 1 erzeugte Drehmoment ist, desto weiter wird das Lasttrum 7 des Kraftübertragungsmittels 4 ausgelenkt. Diese Auslenkung des Lasttrums 7 des Kraftübertragungsmittels 4 wird von dem Sensor 5 erfasst.

Um die benötigte elektromotorische Hilfskraft in Abhängigkeit des an dem ersten Antrieb 1 anliegenden aktuellen Drehmoments zu berechnen, weist die erfindungsgemäße Antriebsvorrichtung 10 eine Steuervorrichtung 13 auf. Die Steuervorrichtung 13 ist mittels geeigneter, drahtgebundener oder drahtloser, Signalleitungen 14, 15 mit dem Elektromotor 2 und dem Sensor 5 verbunden. Die Steuervorrichtung 13 kann innerhalb oder außerhalb des Gehäuses 12 angeordnet sein.

Die Steuervorrichtung 13 ist ausgebildet, um die von dem Sensor 5 generierten Sensordaten zu erfassen. Die Steuervorrichtung 13 ist außerdem ausgebildet, um, basierend auf diesen Sensordaten, Steuerdaten zum Ansteuern des Elektromotors 2 bereitzustellen. Hierfür kann die Steuervorrichtung 13 eine geeignete Schnittstelle aufweisen, mittels derer die Steuervorrichtung 13 mit dem Elektromotor 2 verbindbar ist. Der Elektromotor 2 kann seine an den Abtrieb 3 abzugebende Hilfskraft (bzw. zusätzliche Antriebskraft) durch geeignete Leistungsregelung anpassen. Je nach Ausführung des Elektromotors 2 und der gewählten Über- bzw. Untersetzung kann der Elektromotor 2 bei Bedarf entweder eine erhöhte Ausgangsdrehzahl oder ein erhöhtes Ausgangsdrehmoment bereitstellen.

Die Steuervorrichtung 13 ist also ausgebildet, um die Sensordaten zu erfassen und den Elektromotor 2, basierend auf den Sensordaten, derart anzusteuern, dass dieser ein von der Auslenkung des Lasttrums 7 abhängiges Drehmoment oder von der Auslenkung des Lasttrums 7 abhängige Drehzahlen generiert.

Die Steuervorrichtung 13 kann ein Motorsteuergerät aufweisen. In einem Speicher der Steuervorrichtung 13 bzw. des Motorsteuergeräts ist vorzugsweise ein Kennfeld hinterlegt. Dieses Kennfeld beschreibt die zu einem Zeitpunkt t von dem Elektromotor 2 abzugebende Hilfskraft in Abhängigkeit von dem Ist-Wert des an dem ersten Antrieb 1 anliegenden Drehmoments zu diesem Zeitpunkt t.

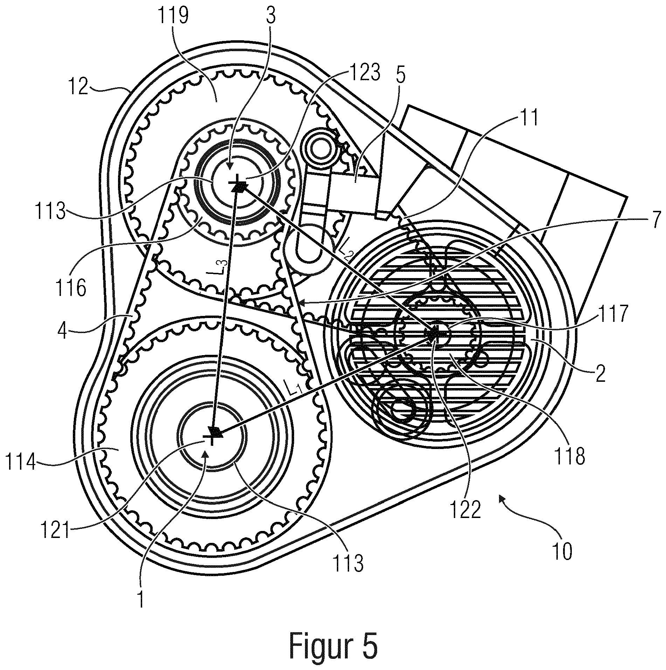

Figur 5 zeigt eine weitere Seitenansicht der erfindungsgemäßen Antriebsvorrichtung 10. Zu erkennen ist der erste Antrieb 1, der Elektromotor 2 und der Abtrieb 3. Die beiden Kraftübertragungsmittel 4, 11 sind jeweils als ein Zahnriemen ausgebildet.

Außerdem sind die, zuvor mit Bezug auf Figur 4 beschriebenen, Komponenten zu erkennen. Hierzu zählen die Antriebswelle 113 und das daran angeordnete Zahnrad 114, die Motorausgangswelle 117 und das daran angeordnete Zahnrad 118. Abtriebsseitig ist die Ausgangswelle 113 zu erkennen. Daran angeordnet sind das mit dem ersten Eingang 1 verbundene Zahnrad 116 sowie das mit dem Elektromotor 2 verbundene Zahnrad 119.

Das Zahnrad 114 des ersten Eingangs 114 ist mittels des ersten Zahnriemens 4 mit dem an der Ausgangswelle 113 des Abtriebs 3 angeordneten Zahnrad 116 gekoppelt. Das Zahnrad 117 des Elektromotors 2 ist mittels des zweiten Zahnriemens 11 mit dem an der Ausgangswelle 113 des Abtriebs 3 angeordneten Zahnrad 119 gekoppelt. Der Sensor 5 ist im Lasttrum 7 des ersten Zahnriemens 4 angeordnet.

Mit Bezug auf die Figuren 4 und 5 ist zu erkennen, dass der erste Antrieb 1 eine Mittelachse 121 aufweist. Der Elektromotor 2 weist eine Mittelachse 122 auf, und der Abtrieb 3 weist eine Mittelachse 123 auf. Die Mittelachsen 121, 122, 123 verlaufen parallel zueinander. Sie sind jedoch in radialer Richtung zueinander versetzt angeordnet. Dementsprechend sind auch der erste Antrieb 1, der Elektromotor 2 und der Abtrieb 3 in radialer Richtung bezüglich ihrer jeweiligen Mittelachsen 121, 122, 123 zueinander versetzt angeordnet.

Wie in Figur 5 zu erkennen ist, weist die Mittelachse 121 des ersten Antriebs 1 zu der Mittelachse 122 des Elektromotors 2 eine radiale Beabstandung der Länge L₁ auf. Die Mittelachse 122 des Elektromotors 2 weist zu der Mittelachse 123 des Abtriebs 3 eine radiale Beabstandung der Länge L₂ auf. Die Mittelachse 123 des Abtriebs 3 weist zu der Mittelachse 121 des ersten Antriebs 1 eine radiale Beabstandung der Länge L₃ auf.

Die Länge L₃, d.h. der Abstand zwischen dem ersten Antrieb 1 und dem Abtrieb beträgt in einer Ausführungsform 100 mm bis 300 mm. In einer weiteren Ausführungsform sind der erste Antrieb 1 und der Abtrieb 3 etwa 100 mm bis etwa 200 mm voneinander beabstandet angeordnet. In einer bevorzugten Ausführungsform sind der erste Antrieb 1 und der Abtrieb 3 etwa 150 mm bis etwa 200 mm voneinander beabstandet angeordnet.

In einem hier nicht näher dargestellten Ausführungsbeispiel können die Mittelachse 122 des Elektromotors 2 und die Mittelachse 123 des Abtriebs 3 zueinander koaxial sein. Dementsprechend könnte der Motor 2 im Bereich der Ausgangswelle 115 angeordnet sein. Anstelle der Motorausgangswelle 117 könnte die abtriebsseitige Ausgangswelle 115 eine Motorausgangswelle bilden. Der Elektromotor 2 würde in diesem Fall die Ausgangswelle 115 direkt antreiben. Dementsprechend könnten die in Figur 4 gezeigte motorseitige Ausgangswelle 117, das daran angeordnete Zahnrad 118 und das zweite Kraftübertragungsmittel 11 entfallen.

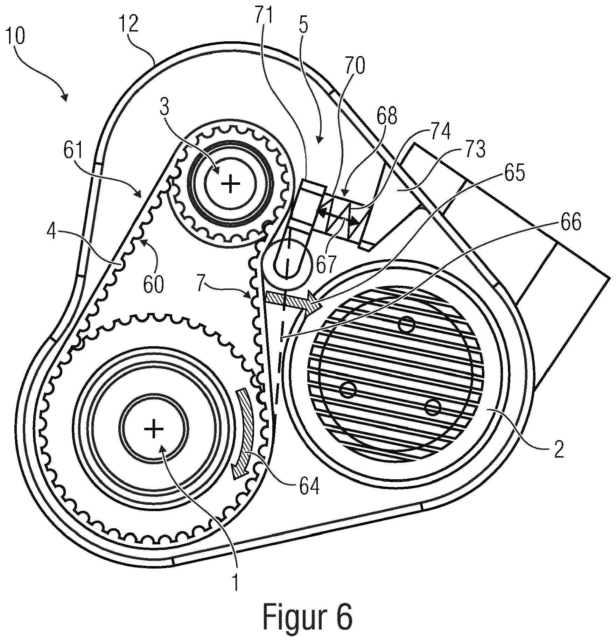

Figur 6 zeigt eine weitere Seitenansicht einer erfindungsgemäßen Antriebsvorrichtung 10. Zu besseren Erkennbarkeit des Sensors 5 sind einige der zuvor beschriebenen Komponenten nicht näher dargestellt.

Figur 6 zeigt das Gehäuse 12, in dem der erste Antrieb 1, der Elektromotor 2 und der Abtrieb 3 angeordnet sind. Der erste Antrieb 1 ist mittels des Kraftübertragungsmittels 4 mit dem Abtrieb 3 gekoppelt. Das Kraftübertragungsmittel 4 ist in diesem Ausführungsbeispiel erneut als ein Zahnriemen ausgeführt. Es ist aber auch denkbar, dass das Kraftübertragungsmittel 4 als ein Keilriemen oder eine Kette ausgeführt ist.

Der Zahnriemen 4 ist ein Endlostriebmittel, das eine Innenseite 60 und eine Außenseite 61 aufweist. Die Innenseite 60 weist Zähne auf, während die Außenseite 61 in der Regel plan ausgeführt ist.

Der Sensor 5 ist mit der Außenseite 61 des Zahnriemens 4 in Kontakt. Bei einer Drehung des Antriebs 1 in Pfeilrichtung 64 spannt sich der Zahnriemen 4. Genauer gesagt spannt sich das in Fahrtrichtung vorne (im Bild rechts) liegende Trum des Zahnriemens 4, während das in Fahrtrichtung hinten (im Bild links) liegende Trum ohne wesentliche Zugkrafteinwirkung erschlafft. Das gespannte Trum ist das Lastttrum 7. Bei Rotation des ersten Antriebs 1 in Pfeilrichtung 64 wird das Zugtrum oder Lasttrum 7 in Pfeilrichtung 65 ausgelenkt, bis zu einem maximalen Auslenkpunkt, bzw. einem Punkt maximaler Spannung, der durch die gestrichelte Linie 66 gekennzeichnet ist.

Sobald das Drehmoment an dem ersten Antrieb 1 weniger wird, reduziert sich auch die Spannung des Lasttrums 7 und der Zahnriemen 4 kehrt immer weiter in seine in Figur 6 gezeigte Ausgangsposition zurück.

Der Sensor 5 weist eine Auslenkvorrichtung 68 auf. Die Auslenkvorrichtung 68 ist erfindungsgemäß als eine lineare Auslenkvorrichtung 68 ausgestaltet. Das heißt bei Auslenkung des Zahnriemens 4 wird die Auslenkvorrichtung 68 linear, d.h. in Richtung des Doppelpfeils 67 ausgelenkt. Hierfür kann die Auslenkvorrichtung 68 beispielsweise ein stabförmiges Element 70 aufweisen, auf dem ein ringförmiges Element 71 gleitend angeordnet ist.

Das stabförmige Element 70 kann sich an einem an dem Gehäuse 12 vorgesehenen Lager 73 abstützen. Ein Rückstellelement 74 kann zwischen dem Lager 73 und dem ringförmigen Element 71 angeordnet sein, um das ringförmige Element 71 in die in Figur 6 gezeigte Ausgangsposition zu drücken. Die Auslenkvorrichtung 68 kann also mittels eines geeigneten Rückstellelements, wie z.B. einer Feder 74, vorgespannt sein, vorzugsweise derart, dass die Auslenkvorrichtung 68 kraftbeaufschlagt gegen die Außenseite 61 des Kraftübertragungsmittels 4 wirkt.

Je mehr Drehmoment über den ersten Antrieb 1 in die erfindungsgemäße Antriebsvorrichtung 10 eingeleitet wird, desto weiter spannt sich der Zahnriemen 4, sodass er in Pfeilrichtung 65 ausgelenkt wird. Je weiter der Zahnriemen 4 in Pfeilrichtung 65 ausgelenkt wird, desto weiter bewegt sich die Auslenkvorrichtung 68 des Sensors 5 in die entsprechende Richtung, d.h. in Richtung des Lagers 73.

Die Auslenkvorrichtung 68 ist also mit dem Lasttrum 7 des Kraftübertragungsmittels 4 in Kontakt und wirkt derart mit dem Kraftübertragungsmittel 4 zusammen, dass sie bei einem Spannen des Lasttrums 7 des Kraftübertragungsmittels 4 ausgelenkt wird.

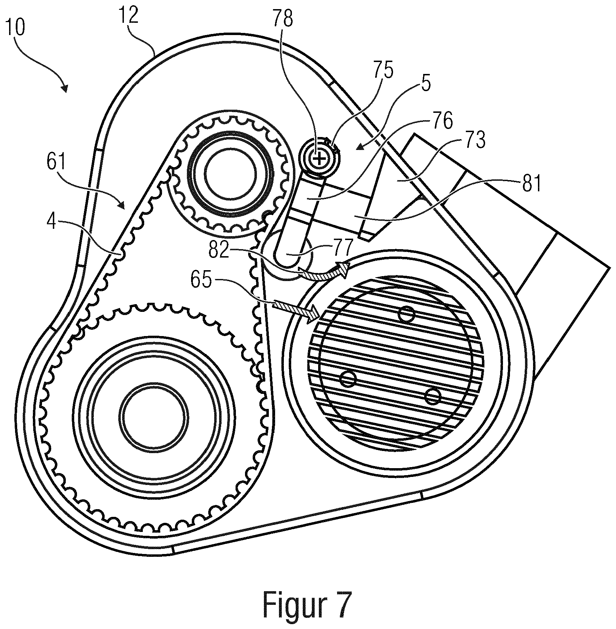

Figur 7 zeigt im Wesentlichen dieselbe zuvor beschriebene Antriebsvorrichtung 10. Der Unterschied besteht in der hier rein beispielhaft beschriebenen Ausgestaltung des Sensors 5. In diesem Beispiel weist der Sensor 5 eine schwenkbare Auslenkvorrichtung 68 auf.

Die Auslenkvorrichtung 68 weist einen Ausleger 76 auf, der an einem Ende 75 schwenkbar an dem Gehäuse 12 angeordnet ist Hierfür ist ein Bolzen 78 an dem Gehäuse 12 angeordnet, der sich von der Gehäuseinnenseite in die gegenüberliegende Richtung, d.h. in Richtung des Sensors 5 erstreckt. An diesem Bolzen 78 ist der Ausleger 76 drehbar angeordnet.

Das gegenüberliegende Ende 77 des Auslegers 76 ist mit der Außenseite 61 des Kraftübertragungsmittels 4 in Kontakt. Sobald das Lasttrum 7 des Kraftübertragungsmittels 4 gespannt wird und in Pfeilrichtung 65 ausgelenkt wird, schwenkt der Ausleger 76 in Pfeilrichtung 82 aus.

Die Auslenkvorrichtung 68 weist ein elastisches Element 81 auf. Dieses kann beispielsweise ein Gummipuffer sein. Das elastische Element 81 stütz sich an dem Lager 73 des Gehäuses 12 ab. Das elastische Element 81 kann einen Piezokristall aufweisen, der ausgebildet ist, um eine elektrische Spannung in Abhängigkeit von der auf das elastische Element 81 ausgeübten Kraft zu erzeugen. Je weiter der Ausleger 76 ausgelenkt wird, desto größer ist die Kraft, die auf das elastische Element 81 ausgeübt wird.

Die Auslenkvorrichtung 68 ist also mit dem Lasttrum 7 des Kraftübertragungsmittels 4 in Kontakt und wirkt derart mit dem Kraftübertragungsmittel 4 zusammen, dass sie bei einem Spannen des Lasttrums 7 des Kraftübertragungsmittels 4 ausgelenkt wird.

## Patentansprüche

1. Antriebsvorrichtung (10) für ein elektromotorisch betriebenes zweirädriges Fahrrad (100), aufweisend:
einen ersten Antrieb (1) zum Bereitstellen einer ersten Antriebskraft,
einen Elektromotor (2) zum Bereitstellen einer zweiten Antriebskraft,
einen Abtrieb (3), der ausgebildet ist, um die erste und/oder die zweite Antriebskraft aufzunehmen und an mindestens ein anzutreibendes Rad (110) des Fahrrads (100) abzugeben,
ein zwischen dem ersten Antrieb (1) und dem Abtrieb (3) angeordnetes Kraftübertragungsmittel (4), und
einen am Lasttrum (7) des Kraftübertragungsmittels (4) angeordneten Sensor (5), der ausgebildet ist, um Sensordaten in Abhängigkeit einer Auslenkung (65) des Kraftübertragungsmittels (4) zu generieren, wobei der Sensor (5) derart angeordnet ist, dass dieser mit der Außenseite (61) des Lasttrums (7) des Kraftübertragungsmittels (4) in Kontakt ist,
wobei der Sensor (5) eine Auslenkvorrichtung (68) aufweist, die mit dem Lasttrum (7) des Kraftübertragungsmittels (4) in Kontakt ist und derart mit dem Kraftübertragungsmittel (4) zusammenwirkt, dass sie bei einem Spannen des Lasttrums (7) des Kraftübertragungsmittels (4) ausgelenkt wird,
wobei die Auslenkvorrichtung (68) linear auslenkbar ist, **dadurch gekennzeichnet, dass**
der erste Antrieb (1), der Abtrieb (3), das Kraftübertragungsmittel (4) und der Sensor (5) in einem gemeinsamen Gehäuse (12) angeordnet sind.

2. Antriebsvorrichtung (10) nach Anspruch 1, wobei die Auslenkvorrichtung (68) ein stabförmiges Element (70) aufweist, das sich an einem an einem Gehäuse (12) vorgesehenen Lager (73) abstützt, und wobei ein ringförmiges Element (71) gleitend auf dem stabförmigen Element (70) angeordnet ist.

3. Antriebsvorrichtung (10) nach Anspruch 2, wobei die Auslenkvorrichtung (68) ausgestaltet ist, um mit zunehmender Spannung des Kraftübertragungsmittels (4) linear in Richtung des Lagers (73) ausgelenkt zu werden.

4. Antriebsvorrichtung (10) nach einem der vorhergehenden Ansprüche, wobei die Auslenkvorrichtung (68) mittels eines Rückstellelements (74) vorgespannt ist.

5. Antriebsvorrichtung (10) nach einem der vorhergehenden Ansprüche aufweisend eine Steuervorrichtung (13), die ausgebildet ist, um die Sensordaten zu erfassen und den Elektromotor (2), basierend auf den Sensordaten, derart anzusteuern, dass dieser ein von der Auslenkung des Lasttrums (7) abhängiges Drehmoment oder von der Auslenkung des Lasttrums (7) abhängige Drehzahlen generiert.

6. Antriebsvorrichtung (10) nach einem der vorhergehenden Ansprüche, wobei das Kraftübertragungsmittel (4) als eine Endlosanordnung, insbesondere als eine Kette oder als ein Keilriemen oder als ein Zahnriemen ausgebildet ist.

7. Antriebsvorrichtung (10) nach einem der vorhergehenden Ansprüche, wobei der erste Antrieb (1), der Elektromotor (2) und der Abtrieb (3) jeweils eine Mittelachse (121, 122, 123) aufweisen, und der erste Antrieb (1), der Elektromotor (2) und der Abtrieb (3) derart zueinander angeordnet sind, dass deren Mittelachsen (121, 122, 123) in radialer Richtung (L₁, L₂, L₃) zueinander versetzt angeordnet sind.

8. Antriebsvorrichtung (10) nach einem der Ansprüche 1 bis 6, wobei der erste Antrieb (1), der Elektromotor (2) und der Abtrieb (3) jeweils eine Mittelachse (121, 122, 123) aufweisen, und der erste Antrieb (1), der Elektromotor (2) und der Abtrieb (3) derart zueinander angeordnet sind, dass die Mittelachsen (121, 122, 123) des Elektromotors (2) und des Abtriebs (3) koaxial sind, und die Mittelachse (121) des ersten Antriebs (1) radial versetzt (L₃) zu den koaxialen Mittelachsen (122, 123) des Elektromotors (2) und des Abtriebs (3) angeordnet ist.

9. Antriebsvorrichtung (10) nach einem der vorhergehenden Ansprüche, wobei der Elektromotor (2) mittels eines weiteren Kraftübertragungsmittels (11), insbesondere mittels einer Kette oder eines Zahnriemens oder eines Keilriemens, mit dem Abtrieb (3) verbunden ist.

10. Antriebsvorrichtung (10) nach einem der vorhergehenden Ansprüche, wobei der erste Antrieb (1) und der Abtrieb (3) in radialer Richtung (L₃) zwischen 100 mm und 300 mm, vorzugsweise zwischen 100 mm und 200 mm, und bevorzugt zwischen 150 mm und 200 mm, voneinander beabstandet angeordnet sind.

11. Antriebsvorrichtung (10) nach einem der vorhergehenden Ansprüche, wobei der erste Antrieb (1) an einer Tretkurbel (106) angeordnet ist, die ausgebildet ist, um eine mittels einer Tretbewegung aufgebrachte mechanische Kraft in die Antriebsvorrichtung (10) einzuleiten.

12. Antriebsvorrichtung (10) nach einem der vorhergehenden Ansprüche, wobei der Elektromotor (2) ein Torquemotor ist.

13. Elektromotorisch betriebenes zweirädriges Fahrrad (100) mit einer Antriebsvorrichtung (10) gemäß einem der vorhergehenden Ansprüche.

## Claims

1. Driving apparatus (10) for a two-wheeled bicycle (100) operated by an electric motor, comprising:
a first drive (1) for providing a first driving force,
an electric motor (2) for providing a second driving force,
an output (3) that is configured to receive the first and/or the second driving force and to deliver it to at least one wheel (110) of the bicycle (100) to be driven,
force transmitting means (4) arranged between the first drive (1) and the output (3) and
a sensor (5) arranged at the driving side (7) of the force transmitting means (4), which is configured to generate sensor data in dependence on a deflection (65) of the force transmitting means (4), wherein the sensor (5) is arranged such that the same is in contact with the outside (61) of the driving side (7) of the force transmitting means (4),
wherein the sensor (5) comprises a deflecting apparatus (68) that is in contact with the driving side (7) of the force transmitting means (4) and cooperates with the force transmitting means (4) such that the same is deflected when tightening the driving side (7) of the force transmitting means (4),
wherein the deflecting means (68) can be linearly deflected,
**characterized in that**
the first drive (1), the output (3), the force transmitting means (4) and the sensor (5) are arranged in a common housing (12).

2. Driving apparatus (10) according to claim 1, wherein the deflecting apparatus (68) comprises a rod-shaped element (70) that is supported on a bearing (73) provided at a housing (12) and wherein a ring-shaped element (71) is arranged on the rod-shaped element (70) in a sliding manner.

3. Driving apparatus (10) according to claim 2, wherein the deflecting apparatus (68) is configured to be linearly deflected in the direction of the bearing (73) with increasing tension of the force transmitting means (4).

4. Driving apparatus (10) according to one of the preceding claims, wherein the deflecting means (68) is biased by means of a restoring element (24).

5. Driving apparatus (10) according to one of the preceding claims, comprising a control apparatus (13) that is configured to detect the sensor data and to control the electric motor (2) based on the sensor data such that the same generates a torque depending on the deflection of the driving side (7) or rotational speeds depending on the deflection of the driving side (7).

6. Driving apparatus (10) according to one of the preceding claims, wherein the force transmitting means (4) is configured as endless arrangement, in particular, as chain or as V-belt or as tooth belt.

7. Driving apparatus (10) according to one of the preceding claims, wherein the first drive (1), the electric motor (2) and the output (3) each comprise a central axis (121, 122, 123), and the first drive (1), the electric motor (2) and the output (3) are arranged such that their central axes (121, 122, 123) are arranged offset to one another in radial direction (L₁, L₂, L₃).

8. Driving apparatus (10) according to one of claims 1-6, wherein the first drive (1), the electric motor (2) and the output (3) each comprise a central axis (121, 122, 123), and the first drive (1), the electric motor (2) and the output (3) are arranged such that the central axes (121, 122, 123) of the electric motor (2) and the output (3) are coaxial and the central axis (128) of the first drive (1) is arranged radially offset (L₃) to the coaxial central axes (122, 123) of the electric motor (2) and the output (3).

9. Driving apparatus (10) according to one of the preceding claims, wherein the electric motor (2) is connected to the output (3) by means of a further force transmitting means (11), in particular, by means of a chain or tooth belt or V-belt.

10. Driving apparatus (10) according to one of the preceding claims, wherein the first drive (1) and the output (3) are arranged spaced apart from another in radial direction (L₃) between 100 mm and 300 mm, preferably between 100 mm and 200 mm, and preferably between 150 mm and 200 mm.

11. Driving apparatus (10) according to one of the preceding claims, wherein the first drive (1) is arranged on a crank (106) that is configured to introduce a mechanical force into the driving apparatus (10) applied by means of a treading movement.

12. Driving apparatus (10) according to one of the preceding claims, wherein the electric motor (2) is a torque motor.

13. Two-wheeled bicycle (100) operated by an electric motor comprising a driving apparatus (10) according to one of the preceding claims.

## Revendications

1. Dispositif d'entraînement (10) pour une bicyclette à deux roues à actionnement par moteur électrique (100), présentant:
un premier entraînement (1) destiné à mettre à disposition une première force d'entraînement,
un moteur électrique (2) destiné à mettre à disposition une deuxième force d'entraînement,
une sortie (3) qui est conçue pour recevoir la première et/ou la deuxième force d'entraînement et pour la transmettre à au moins une roue à entraîner (110) de la bicyclette (100),
un moyen de transmission de force (4) disposé entre le premier entraînement (1) et la sortie (3), et
un capteur (5) disposé sur le brin de charge (7) du moyen de transmission de force (4), qui est conçu pour générer des données de capteur en fonction d'une déviation (65) du moyen de transmission de force (4), où le capteur (5) est disposé de sorte qu'il soit en contact avec la face extérieure (61) du brin de charge (7) du moyen de transmission de force (4),
dans lequel le capteur (5) présente un dispositif de déviation (68) qui est en contact avec le brin de charge (7) du moyen de transmission de force (4) et coopère avec le moyen de transmission de force (4) de sorte qu'il soit dévié en cas de tension du brin de charge (7) du moyen de transmission de force (4),
dans lequel le dispositif de déviation (68) peut être dévié de manière linéaire,
**caractérisé par le fait que** le premier entraînement (1), la sortie (3), le moyen de transmission de force (4) et le capteur (5) sont disposés dans un boîtier commun (12).

2. Dispositif d'entraînement (10) selon la revendication 1, dans lequel le dispositif de déviation (68) présente un élément en forme de tige (70) qui s'appuie sur un palier (73) prévu sur un boîtier (12), et dans lequel un élément annulaire (71) est disposé de manière coulissante sur l'élément en forme de tige (70).

3. Dispositif d'entraînement (10) selon la revendication 2, dans lequel le dispositif de déviation (68) est conçu pour être dévié, à tension croissante du moyen de transmission de force (4), de manière linéaire en direction du palier (73).

4. Dispositif d'entraînement (10) selon l'une des revendications précédentes, dans lequel le dispositif de déviation (68) est précontraint au moyen d'un élément de rappel (74).

5. Dispositif d'entraînement (10) selon l'une des revendications précédentes, présentant un dispositif de commande (13) qui est conçu pour détecter les données du capteur et pour commander le moteur électrique (2), sur base des données du capteur, de sorte qu'il génère un couple qui est fonction de la déviation du brin de charge (7) ou des nombres de tour qui sont fonction de la déviation du brin de charge (7).

6. Dispositif d'entraînement (10) selon l'une des revendications précédentes, dans lequel le moyen de transmission de force (4) est réalisé sous forme d'un aménagement sans fin, notamment sous forme de chaîne ou de courroie trapézoïdale ou de courroie dentée.

7. Dispositif d'entraînement (10) selon l'une des revendications précédentes, dans lequel le premier entraînement (1), le moteur électrique (2) et la sortie (3) présentent, chacun, un axe central (121, 122, 123), et le premier entraînement (1), le moteur électrique (2) et la sortie (3) sont disposés l'un par rapport à l'autre de sorte que leurs axes centraux (121, 122, 123) soient disposés décalés l'un par rapport à l'autre dans la direction radiale (L₁, L₂, L₃).

8. Dispositif d'entraînement (10) selon l'une des revendications 1 à 6, dans lequel le premier entraînement (1), le moteur électrique (2) et la sortie (3) présentent, chacun, un axe central (121, 122, 123), et le premier entraînement (1), le moteur électrique (2) et la sortie (3) sont disposés l'un par rapport à l'autre de sorte que les axes centraux (121, 122, 123) du moteur électrique (2) et de la sortie (3) soient coaxiaux, et que l'axe central (121) du premier entraînement (1) soit disposé décalé radialement (L₃) par rapport aux axes centraux coaxiaux (122, 123) du moteur électrique (2) et de la sortie (3).

9. Dispositif d'entraînement (10) selon l'une des revendications précédentes, dans lequel le moteur électrique (2) est relié à la sortie (3) au moyen d'un autre moyen de transmission de force (11), en particulier au moyen d'une chaîne ou d'une courroie dentée ou d'une courroie trapézoïdale.

10. Dispositif d'entraînement (10) selon l'une des revendications précédentes, dans lequel le premier entraînement (1) et la sortie (3) sont disposés distants l'un de l'autre, dans la direction radiale (L₃), d'une distance comprise entre 100 mm et 300 mm, de préférence entre 100 mm et 200 mm, et de préférence encore entre 150 mm et 200 mm.

11. Dispositif d'entraînement (10) selon l'une des revendications précédentes, dans lequel le premier entraînement (1) est disposé sur une pédale de pied (106) qui est conçue pour introduire dans le dispositif d'entraînement (10) une force mécanique appliquée au moyen d'un mouvement de pédalage.

12. Dispositif d'entraînement (10) selon l'une des revendications précédentes, dans lequel le moteur électrique (2) est un moteur couple.

13. Bicyclette à deux roues à actionnement par moteur électrique (100) avec un dispositif d'entraînement (10) selon l'une des revendications précédentes.
